# EUROPEAN PATENT SPECIFICATION

(11) **EP 3 869 428 B1**
(45) Date of publication and mention of the grant of the patent: **07.08.2024**
(21) Application number: 20158815.9
(22) Date of filing: 21.02.2020
(51) Int. Cl.: G06Q 10/20

(54) **VALIDATING ATTRIBUTES OF A PRODUCT**
VALIDIERUNG VON ATTRIBUTEN EINES PRODUKTS
VALIDATION DES ATTRIBUTS D'UN PRODUIT

(43) Date of publication of application: 25.08.2021
(73) Proprietor: Siemens Aktiengesellschaft, 80333 München (DE)
(72) Inventor: Mangal, Manjush, 560100 Bangalore, Karnataka (IN); Mathew, Akshay, 560100 Bangalore, Karnataka (IN); Pradhan, Simit, 560030 Bangalore, Karnataka (IN); Singh, Prashant Kumar, 560100 Bangalore, Karnataka (IN); Suryanarayana, Girish, 560070 Bangalore, Karnataka (IN); Verma, Divyanshu, 560100 Bangalore, Karnataka (IN)
(74) Representative: Patentanwaltskanzlei WILHELM & BECK

(56) References cited:
- CN-A- 109 034 848
- CN-A- 110 572 480

## Description

The present disclosure relates to product certification and more particularly relates to a system and method for validation of attributes of a product.

Typically, products are tested by a certifying authority and checked for conformance to predefined quality standards. The products are tested for several attributes associated with the performance of the product. However, manufacturers of the products are met with the pressure to reduce the time-to-market of the products due to increasing competition. The time-to-market of a product may be reduced by minimizing human interference in the certification process. In addition to reducing the time-to-market of the product, the manufacturers are also required to ensure that the quality of the products reaching the market meet the predefined quality standards. In order to ensure the quality of the products, more reliable and transparent certification processes are necessary. Further, the security of certification data obtained during the certification process have to be ensured in order to prevent meddling with the certification data before the product reaches the market.

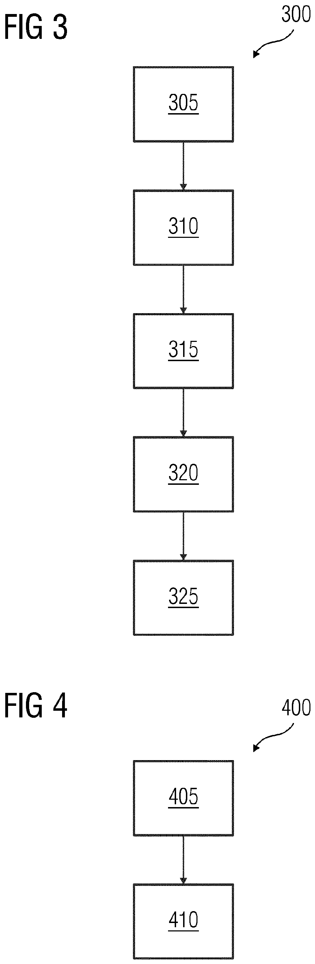

Document CN 110572480A discloses an implementation method, an apparatus and a device for implementing calibration of test equipment 100. The method for implementing test equipment calibration is applied to a network node of a blockchain network 300. Fig. 3 shows for example such a blockchain network with nodes. The nodes form a peer-to-peer network. The method comprises the steps: S11: Acquiring device information and calibration conditions of each test device within a node control range of a first network node, including a device position information, S12: Screening target calibration test equipment 100 located within the node control range of the second network node, S13: Generating corresponding calibration notification information according to the device position information and S14: Obtaining calibration data of the target calibration test equipment and synchronize the calibration data to the blockchain network 300.

Document CN 109034848A discloses a distributed detection and authentication platform, which uses blockchain technology and especially provides Lab as a Service (LaaS). The platform thereby includes an alliance composed of a plurality of detection and authentication units, whereby the detection and authentication units include a laboratory that provides detection and authentication services. The detection and certification unit that initially receives the detection task of the electronic product issued by the customer in the alliance, splits the detection task into several sub-packages, and uploads several sub-packages to the platform in the form of laboratory blocks. The detection and certification unit that receives the order from the platform, downloads the received sub-package from the lab-block. After completing at least one task in the sub-package, the detection and certification unit uploads the test authentication information to the platform. The smart contract and payment information of the certification service are tested to form a new laboratory block until the inspection task is completed. The detection authentication information is stored in a new lab block and all lab-blocks on the platform constitute a detection and authentication blockchain of the electronic product.

In light of the above, there exists a need for storing the attributes of the product obtained during the certification process, in a reliable and secure manner such that the attributes of the product may be easily validated by an end-user.

Therefore, it is an object of the present invention to provide a system and method for validating one or more attributes of a product. The term `attribute` as used herein, may refer to any quality characteristic of the product that is tested and verified during a certification process. Non-limiting examples of attributes include weight, speed rating, power rating, torque rating, current rating, radiation levels, load capacity, flow rating, pressure rating, and so on. The product may include power generation equipment, transmission equipment, power distribution equipment, other electrical equipment, home applicances, medical equipment, process equipment, industrial equipment, automobile parts and so on. Non-limiting examples of such products include gas and steam turbines, wind turbines, windmills, generators, Computerised Numerical Control (CNC) machines, DC motors, AC motors, generators, transformers, transmission relays, Computerised Tomography (CT) scanners, Magnetic Resonance Imaging (MRI) scanners, ultrasound scanners, large and small drives, and so on.

The object of the present invention is achieved by the independent claims. Preferred embodiments are disclosed in the dependent claims.

Advantageously, the present invention facilitates validation of the attributes of a product by any authorized party, thereby ensuring transparency in the certification process. The authorized party may be an end-user, a certifying agent or an Original Equipment Manufacturer (OEM).

The method further comprises identifying one or more components of the product corresponding to the one or more attributes to be validated. In one embodiment, identifying the one or more components of the product corresponding to the one or more attributes to be validated comprises identifying a unique identifier corresponding to the one or more components of the product from the request received. Further, the unique identifier is mapped to the one or more attributes from a plurality of attributes based on a predefined criterion. The predefined criterion may be defined for the one or more components in a pre-existing library that stores information about attributes corresponding to each of the one or more components. For example, if the component is a motor, then the one or more components may be mapped to the attributes such as maximum power rating, a current rating, voltage rating, temperature rating, winding resistance, operating characteristics and so on associated with the motor. Advantageously, the present invention facilitates validation of the attributes of the product at a component-level, rather than at a product-level. Consequently, any deviations in an attribute of the product may be traced to a respective component of the product with greater ease as compared to existing art.

The blockchain data structure may be a decentralized, distributed digital ledger that is used to record transactions across a plurality of nodes connected over a network to form a blockchain-based system, such that the recorded transactions are immutable and may be viewed by any of the nodes. In a preferred embodiment, the blockchain data structure is implemented as a permissioned blockchain. In the permissioned blockchain, one or more nodes, henceforth referred to as validator nodes, in a blockchain-based system may be given express authority for providing permission to any other node for accessing the blockchain data structure. The access to the blockchain data structure may be provided based on predefined protocols, for example, a consensus protocol. The consensus protocol may ensure that the permission for accessing the blockchain data structure provided to the node, is agreed upon by the validator nodes in the blockchain-based system. In an alternate embodiment, the blockchain data structure may be implemented as a permissionless blockchain. In the permissionless blockchain, the any of the nodes connected to the blockchain-based system may access the blockchain data structure without any explicit permission.

In one example, the first transaction may include transaction data associated with fields including, but not limited to, the unique identifier associated with the one or more components, an identifier associated with the physical test performed on the one or more components, predefined parameters associated with the physical test, a response or outcome associated with the physical test on the one or more components and a transaction identifier. Similarly, the second transaction may include transaction data associated with fields including, but not limited to, the unique identifier associated with the one or more components, an identifier associated with the virtual test performed on the virtual model of the one or more components, predefined parameters associated with the virtual test, a response or outcome associated with the virtual test on the virtual model and a transaction identifier. In one embodiment, the virtual model is a digital twin of the one or more components. The digital twin of a component may be a dynamically updated digital model of the component such that the digital twin is capable of reproducing a real-world performance of the component. The virtual model may be based on physics-based models, data-driven models, hybrid models, engineering models, design models, simulation models or a combination thereof. The virtual test may include providing inputs to the virtual model that mimic the actual inputs provided to the one or more components during the physical test performed on the one or more components. It must be understood by a person skilled in the art that in an alternate embodiment, the transaction data in the first transaction and the second transaction may be combined into a single transaction.

Advantageously, the present invention uses a blockchain data structure for recording transactions corresponding to the physical test and the virtual test. Therefore, the transactions are immutable while providing greater transparency into the certification process. Further, the virtual test is conducted on the virtual model of the component in addition to the physical test on the component in order to improve the reliability of the certification process.

In one embodiment, determining the deviation between the one or more outcomes of the physical test from the first transaction and the one or more outcomes of the virtual test from the second transaction includes requesting the one or more outcomes of the physical test from the first transaction and the one or more outcomes of the virtual test from the second transaction. The method further includes receiving the one or more outcomes of the physical test from the first transaction and the one or more outcomes of the virtual test from the second transaction. Further, a difference between the one or more outcomes of the physical test and the one or more outcomes of the virtual test is computed. For example, the attribute to be validated may be a winding resistance of the motor. The winding resistance obtained from the physical test performed on the motor at a temperature of 75°C may be 8 Ohms and the winding resistance obtained from the virtual test performed on the virtual model of the motor may be 5 Ohms. The difference may be computed by arithmetic subtraction of the numerical values of the attributes which is 3 Ohms. Similarly, in case the one or more outcomes of the physical test and the one or more outcomes of the virtual test are in the form of operating characteristics, a speed-torque curve, the deviation may be computed from the operating characteristics by subtracting corresponding speed values for the physical test and the virtual test for each value of torque.

Advantageously, the present invention relies on both the physical test on the component and the virtual test on the virtual model of the component for validating the one or more attributes. This avoids dependency on only the results of the physical tests as in existing art. Consequently, any manipulation during the physical test may be easily identified.

In one embodiment, validating the one or more attributes of the product based on the deviations determined comprises determining whether the computed difference between the response of the at least one component to the physical test and the response of the virtual model to the virtual test conforms to one or more predefined standards associated with the one or more attributes. In yet another example, the predefined standard may be defined such that the deviation between the outcomes of the physical test performed on the one or more components and the virtual test performed on the virtual model of the one or more components for a specific attribute, may not be outside the range of 0-10%. Further, the one or more attributes of the product are validated if the difference between the response of the at least one component to the physical test and the response of the virtual model to the virtual test conforms to the predefined standards. Otherwise, the one or more attributes of the product may not be validated.

Advantageously, the present invention facilitates initiating validation of the one or more attributes of the product by the authorized party without any human intervention in the process of validation.

In accordance with one embodiment, the method may further comprise identifying an anomaly in the product based on the deviation between the one or more outcomes of the physical test from the first transaction and the one or more outcomes of the virtual test from the second transaction. The method may further comprise generating one or more recommendations based on the anomaly identified. In one embodiment, the anomaly may be associated with any deviations in the one or more outcomes of the physical test performed on the one or more components, compared to the one or more outcomes of the virtual test performed on the virtual model of the one or more components. For example, if the deviation does not conform to the predefined standards, then an anomaly may be identified. In another embodiment, the anomaly may also be determined by comparing at least one of the one or more outcomes of the physical test and the one or more outcomes of the virtual test with predefined engineering specifications. The predefined engineering specifications may be, for example, tolerances or maximum or minimum values defined for the one or more attributes. In the above example, the predefined standard value for winding resistance may be, for example, 7 Ohm with a tolerance of +/-25%. Therefore, the winding resistance may vary between 5.25 Ohms and 8.75 Ohms, and may not go below 5.25 Ohms or above 8.75 Ohms. If an anomaly is identified in the outcome of the physical test based on a comparison with the predefined engineering specifications or based on the deviation determined, the product may be considered to be defective. Similarly, if an anomaly is identified in the outcome of the virtual test on comparison with the predefined engineering specifications, then the virtual model may be considered to be defective. The recommendations may be generated based on a type of anomaly identified. For example, if the anomaly is associated with the deviation between the one or more outcomes of the physical test and the one or more outcomes of the virtual test, the recommendation may be associated with calibration of the product. In another example, if the anomaly is associated with deviation from predefined engineering specifications, the recommendation may be associated with replacing or repairing the one or more components. In yet another example, the recommendation may be associated with reporting the deviation to an Original Equipment Manufacturer (OEM) or a vendor of the product.

Advantageously, the present invention facilitates providing recommendations corresponding to anomalies that may be detected while validating the one or more attributes of the product, to the authorized party.

In accordance with one embodiment, the method further comprises outputting a result of validation of the one or more attributes of the product on a Graphical User Interface of an output device. The output device may be the same as the source from where the request for validating the one or more attributes of the product originated. In another example, the output device may be another electronic device associated with another entity, say the OEM or a certification authority.

The node comprising one or more processing units and a memory unit communicatively coupled to the one or more processing units. The memory unit comprises an attribute validation module stored in the form of machine-readable instructions executable by the one or more processing units. The attribute validation module is configured for validating the one or more attributes of the product according to the method described above. The execution of the attribute validation module may also be performed using co-processors such as Graphical Processing Unit (GPU), Field Programmable Gate Array (FPGA) or Neural Processing/Compute Engines. In addition, the memory unit may also include a database.

According to an embodiment, the node can be an edge computing device. As used herein "edge computing" refers to a computing environment that is capable of being performed on an edge device (e.g., connected to the sensors unit in an industrial setup on one end and to a remote server (s) such as for computing server(s) or cloud computing server(s) on other end), which may be a compact computing device that has a small form factor and resource constraints in terms of computing power. A network of the edge computing devices can also be used to implement the node. Such a network of edge computing devices is referred to as a fog network.

In another embodiment, the node is a cloud computing system having a cloud computing based platform configured to provide a cloud service for validating one or more attributes of the product. As used herein, "cloud computing" refers to a processing environment comprising configurable computing physical and logical resources, for example, networks, servers, storage, applications, services, etc., and data distributed over the network, for example, the internet. The cloud computing platform may be implemented as a service for analyzing the material data for predicting the life. In other words, the cloud computing system provides on-demand network access to a shared pool of the configurable computing physical and logical resources. The network is, for example, a wired network, a wireless network, a communication network, or a network formed from any combination of these networks.

The blockchain-based system for validating one or more attributes of a product comprises a network and one or more nodes as described above, communicatively coupled over the network. The one or more nodes are configured to validate the one or more attributes of the product, according to any of the method as described above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: illustrates a blockchain-based system for validating one or more attributes of a product, in accordance with one embodiment of the present invention;
- FIG 1B: illustrates functional components of each node on the blockchain-based system for validating one or more attributes of the product, in accordance with one embodiment of the present invention;
- FIG 2: illustrates a flowchart of a method for recording transactions on a blockchain data structure stored on each of the nodes on the blockchain-based system, in accordance with one exemplary embodiment of the present invention;
- FIG 3: illustrates a flowchart of a method for validating one or more attributes of the product, in accordance with one embodiment of the present invention;
- FIG 4: illustrates a flowchart of a method for identifying one or more components of the product corresponding to the one or more attributes to be validated, in accordance with one embodiment of the present invention;
- FIG 5: illustrates a flowchart of a method for determining a first transaction and a second transaction associated with the one or more components from the blockchain data structure, in accordance with one embodiment of the present invention; and
- FIG 6: illustrates a flowchart of a method for validating the one or more attributes of the product based on the deviations determined, in accordance with one embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments.

It may be evident that such embodiments may be practiced without these specific details.

Disclosed embodiments provide systems and methods for validating attributes of the product.

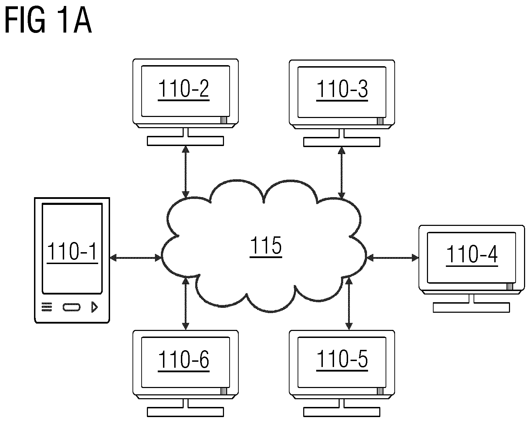

Referring to FIG 1A, a blockchain-based system 105 for validating one or more attributes of a product is described, in accordance with one embodiment of the present invention. The system 105 comprises a plurality of nodes 110-1, 110-2, 110-3, 110-4, 110-5, ... 110-N, hereinafter collectively referred as nodes 110, communicatively coupled to each other over a network 115. In FIG 1A, the system 105 is represented as six nodes 110-1, 110-2, 110-3, 110-4, 110-5 and 110-6 connected over the network 115.

Each of the nodes 110 may be a (personal) computer, a smartphone, a personal digital assistant a workstation, a virtual machine running on host hardware, a microcontroller, or an integrated circuit. As an alternative, each of the nodes 110 may be a real or a virtual group of computers (the technical term for a real group of computers is "cluster", the technical term for a virtual group of computers is "cloud"). In an exemplary embodiment, the node 110-1 may be associated with an end-user of the product, the node 110-2 may be associated with a vendor, the node 110-3 may be associated with another end-user of a similar product, the node 110-4 may be associated with a certifying agent and so on. It must be understood that the blockchain-based system 105 may comprise any number of nodes 110 and each of the nodes 110 may be associated with an entity that is party to certification of attributes of a product, validation of the attributes of the product or providing maintenance services for the product. Therefore, an end-user may connect to the blockchain-based system 105 from an electronic device, at any point of time. Upon connecting, the electronic device associated with the end-user is considered as a node on the blockchain-based system 105.

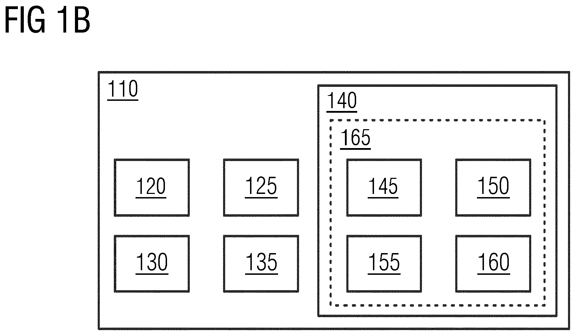

The node 110 is described in greater detail in FIG 1B. Referring to FIG 1B, each of the nodes 110 includes a communication unit 120, one or more processing units 125, a display 130, a Graphical User Interface (GUI) 135 and a memory 140 communicatively coupled to each other as shown in FIG 1B. In one embodiment, the communication unit 120 includes a transmitter (not shown), a receiver (not shown) and Gigabit Ethernet port (not shown). The memory 140 may include 2 Giga byte Random Access Memory (RAM) Package on Package (PoP) stacked and Flash Storage. The one or more processing units 125 are configured to execute the defined computer program instructions in the modules. Further, the one or more processing units 125 are also configured to execute the instructions in the memory 140 simultaneously. The display 130 includes a High-Definition Multimedia Interface (HDMI) display and a cooling fan (not shown). Additionally, control personnel may access the node 110 through the GUI 140. The GUI 140 may include a web-based interface, a web-based downloadable application interface, and so on.

The processing unit 125, as used herein, may refer to any type of computational circuit, including, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 125 may also include embedded controllers, such as generic or programmable logic devices or arrays, application specific integrated circuits, single-chip computers, and the like. In general, a processing unit 125 may comprise hardware elements and software elements. The processing unit 125 can be configured for multithreading, i.e. the processing unit 125 may host different calculation processes at the same time, executing the either in parallel or switching between active and passive calculation processes.

The memory 140 may comprise a volatile memory and a nonvolatile memory. The memory 140 may be coupled for communication with the processing unit 125. The processing unit 125 may execute instructions and/or code stored in the memory 140. A variety of computer-readable storage media may be stored in and accessed from the memory 140. The memory 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. The memory 140 stores a blockchain data structure comprising a record of all the transactions happening across each of the nodes 110. It must be understood that each of the nodes 110 store the same copy of the blockchain data structure. Consequently, if any of the nodes 110 attempt to modify existing records on the blockchain data structure or to write a new record into the blockchain data structure, each of the nodes 110 may validate such transactions through a consensus protocol. In the present embodiment, the blockchain data structure may be based on a public blockchain where any node among the plurality of nodes 110 may read transactions recorded on the blockchain data structure and may also participate in validation of new transactions through the consensus protocol.

The consensus protocol enables the nodes 110 to agree on a transaction before being recorded on the blockchain data structure. Each of the nodes 110 may be one of a member node or a validator node. The member nodes may initiate or receive transactions on the blockchain-based system 105, whereas the validator nodes may also validate transactions on the blockchain-based system 105 in addition to initiating or receiving transactions.

The memory 140 comprises a component identification module 145, transaction identification module 150, a deviation detection module 155 and a report generation module 160, collectively referred as attribute validation module 165. The attribute validation module 165 is stored in the form of machine-readable instructions on any of the above-mentioned storage media and may be in communication to and executed by the one or more processing units 125. The following description explains functions of the modules when executed by the one or more processing units 125.

The component identification module 145 is configured to receive a request for validating the one or more attributes of the product from any one of the nodes 110. Further, the component identification module 145 is also configured for identifying one or more components of the product corresponding to the one or more attributes to be validated.

The transaction identification module 150 is configured for determining a first transaction and a second transaction associated with the one or more components from the blockchain data structure. The first transaction comprises one or more outcomes of a physical test performed on the one or more components and the second transaction comprises one or more outcomes of a virtual test performed on one or more virtual models associated with the one or more components.

The deviation detection module 155 is configured for determining a deviation between the one or more outcomes of the physical test from the first transaction and the one or more outcomes of the virtual test from the second transaction. Further, the deviation detection module 155 is also configured for validating the one or more attributes of the product based on the deviation determined. In addition, the deviation detection module 155 is also configured for identifying an anomaly in the product based on the deviation between the one or more outcomes of the physical test from the first transaction and the one or more outcomes of the virtual test from the second transaction. Further, the deviation detection module 155 may also be configured for generating one or more recommendations based on the anomaly identified.

The report generation module 160 is configured for generating reports associated with the validation of the one or more attributes of the product. The generated reports may include an indication of whether the attributes are validated, deviations between the outcomes of the physical test performed on the components of the product and the virtual test performed on the virtual model of the one or more components, anomalies identified, recommendations generated based on the anomalies and so on. In addition, the reports may also include more information associated with the physical test and the virtual test, such as testing conditions, inputs provided during the tests, time-stamps associated with the tests and so on.

Those of ordinary skilled in the art will appreciate that the hardware depicted in FIG 1A may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

A system in accordance with an embodiment of the present invention includes an operating system employing a Graphical User Interface. The operating system permits multiple display windows to be presented in the Graphical User Interface simultaneously with each display window providing an interface to a different application or to a different instance of the same application. A cursor in the Graphical User Interface may be manipulated by a user through the pointing device. The position of the cursor may be changed and/or an event such as clicking a mouse button, generated to actuate a desired response.

One of various commercial operating systems, such as a version of Microsoft Windows^{™} may be employed if suitably modified. The operating system is modified or created in accordance with the present invention as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises elements distributed among one or more server systems that perform multiple functions according to various embodiments. These elements comprise, for example, executable, intermediate, or interpreted code, which communicate over a network using a communication protocol. The present invention is not limited to be executable on any particular system or group of systems, and is not limited to any particular distributed architecture, network, or communication protocol.

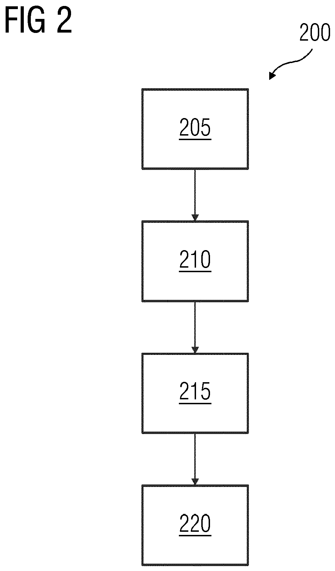

Referring to FIG 2, in conjunction with FIGS 1A and 1B, a method for recording transactions corresponding to a physical test and a virtual test, on the blockchain data structure across the nodes 110 is described, in accordance with one exemplary embodiment of the present invention. In the present embodiment, the product is a CNC machine (not shown) and the component is a servo motor (not shown). The attributes associated with the servo motor may include, but not limited to, speed, power rating, weight, torque and voltage rating. The virtual test is performed on a digital twin of the servo motor, in order to test the speed of the servo motor. The digital twin is a hybrid model of the motor that is dynamically updated based on one or more sensors (not shown) deployed on the servo motor. Consequently, the digital twin may replicate a real-world behaviour of the servo motor. The virtual test may correspond to the physical test performed on the servo motor. The hybrid model may be obtained from a combination of a physics-based model of the servo motor and a data-driven model of the servo motor.

At step 205, a test environment is set-up for conducting the physical test and the virtual test by coupling sensing units to the product. The physical test and the virtual test may be henceforth collectively referred to as tests. The sensing units may measure one or more responses of the product and also provide operating parameters associated with the product for dynamically updating a digital twin of the product or a digital twin of the one or more components of the product. The digital twin may be located on an edge device, a fog network or on a cloud-based platform. Upon setting up the test environment, the operator may initiate the physical test on the component and the virtual test on the digital twin of the component by providing the unique identifier Ui and the type of test *Tⱼ* as inputs to a test device. The test device may be an electronic device that may communicate with the blockchain-based system 105 over the network 115. In the present embodiment, the node 110-4 associated with the certifying agent is the test device. The test device may further determine the inputs to be provided to the component for the physical test and the digital twin of the component for the virtual test based on predefined rules defined for the test *Tⱼ*. The predefined rules may map the test *Tⱼ* to a set of test parameters including inputs to be provided to each of the component and the digital twin of the component. In one embodiment, the predefined rules may be stored in the memory 140 of the test device. Upon determining the inputs, the test device provides the inputs to the component and the digital twin of the component. In one example, the input to the component may be provided through a suitable digital-to-analog converter. Further, the responses of the component and the digital twin of the component are captured by the sensing units.

At step 210, the responses captured by the sensing units are further transmitted to at least one node among the plurality of nodes 110-1 to 110-6. In one implementation, the at least one node is the test device, that is the node 110-4, and the sensing units transmit the responses to the test device. In another implementation, the test device may transmit the responses captured by the sensing units to the blockchain-based system 105. The responses may be transmitted to the node 110-4 at predefined time intervals, for example, every 20 microseconds.

At step 215, a first smart contract stored on the node 110-4 may create the first transaction and the second transaction based on the responses received. The term 'first smart contract' as used herein, is defined as a software module comprising a set of machine-readable instructions, which when executed creates the first transaction and the second transaction for storing on the blockchain data structure in the memory 140 of each of the nodes 110-1 to 110-6. Similarly, the first transaction and the second transaction are created based on the responses captured by the sensing units for the predefined time interval. In the present embodiment, each of the transactions on the blockchain data structure may comprise at least a unique identifier *Uᵢ* that uniquely identifies the component, a test identifier *Tⱼ* that identifies a type of the test, test parameters *TPᵢⱼₖ* associated with the test, the responses *Rᵢⱼₖ* corresponding to the test. In one example, the unique identifier *Uᵢ* may be a serial number or a part number associated with the component; the test identifier *Tⱼ* may identify the type of test as one of a speed test, a current test, a torque test and so on. For example, the speed test may be identified by the identifier '112', the current test may be identified by the identifier '113' and so on. The test parameters *TPᵢⱼₖ* may indicate the inputs provided during the test, the environment parameters during the test and so on. For example, the test parameters may include input voltage of 6V, ambient temperature of 24°C and so on. The responses *Rᵢⱼₖ* may include an outcome of the test. For example, in case of a speed test, the outcome is indicated by a speed output say 60 rpm or 60°. In addition, the transaction may also comprise a plurality of fields such as an object identifier *objectID* that uniquely identifies the transaction, a type identifier t that indicates whether the transaction is associated with a physical test or a virtual test and a counter *TC* indicating the number of times the test is performed for the same input or different inputs. In one example, the type identifier t may be '0' for a physical test and '1' for a virtual test. Each of the transactions is created from the unique identifier *Uᵢ*, the test identifier *Tⱼ*, the test parameters *TPᵢⱼₖ,* the responses *Rᵢⱼₖ*, the object identifier *objectID,* the type identifier t and the counter *TC* using a hash function. The hash function may be a mathematical function that maps data of arbitary size to a bit string of a fixed size in order to create transactions of fixed size. For example, the physical test is associated with testing speed of the servo motor. At an instant of time, say at 40 microseconds from initiating the test, the average speed may be measured as 60 degrees for an input of 4.8 V input to the servo motor. Therefore, the first smart contract may create the first transaction by hashing the unique identifier Uᵢ, the unique test identifier *Tⱼ*, the test parameters TPᵢⱼₖ, the response RPᵢⱼₖ at 40 microseconds, the object identifier, the type identifier t, and the counter *TC* associated with the physical test. Similarly, the average speed may be measured as 62 degrees, at 40 microseconds from initiating the test, for an input of 4.8 V to the digital twin of the servo motor. Therefore, the first smart contract may create the second transaction by hashing the unique identifier Uᵢ, the unique test identifier *Tⱼ*, the test parameters TPᵢⱼₖ, the response RPᵢⱼₖ at 40 microseconds, the object identifier, the type identifier t, and the counter *TC* associated with the virtual test.

At step 220, the first smart contract writes the first transaction and the second transaction into the blockchain data structure. In the present example, the first transaction and the second transaction are written into the blockchain data structure for every 20 microseconds.

Referring to FIG 3, a method 300 for validating one or more attributes of a product is described, in accordance with one embodiment of the present invention. The method 300 comprises steps 305 to 325. The method 300 is implemented using the blockchain-based system 105 as described above.

At step 305, a request for validating the one or more attributes of the product is received from a source.

At step 310, one or more components of the product are identified corresponding to the one or more attributes to be validated.

At step 315, a first transaction and a second transaction associated with the one or more components are determined from a blockchain data structure. The first transaction comprises one or more outcomes of a physical test performed on the one or more components, and wherein the second transaction comprises one or more outcomes of a virtual test performed on one or more virtual models associated with the one or more components.

At step 320, a deviation between the one or more outcomes of the physical test from the first transaction and the one or more outcomes of the virtual test from the second transaction is determined.

At step 325, the one or more attributes of the product are validated based on the deviation determined.

Referring back to FIG 1A, the source may be the node 110-1 associated with an end-user of the product. More specifically, the node 110-1 may be an electronic device associated with the end-user of the product. The end-user may access an application through a user interface of the electronic device. The application may be one of a web-based application or a clientbased application loaded on the electronic device. The application may be associated with an Original Equipment Manufacturer of the product. In one example, the user may send a request for validating the products by, firstly launching the application on the user interface of the electronic device. The application may be launched using a touch-based gesture, a voice-based gesture or an action-based gesture.

Upon launching, the application may display an option for selecting or entering a product for which the attributes are to be validated. For example, the user may select the product as 'CNC machine' from a drop-down menu comprising a list of products. Further, the user may select a model of the CNC machine as, for example, SINUMERIK 840D, from another drop-down menu comprising a list of models of CNC machines manufactured by the OEM. Further, the application may prompt the user to input a serial number associated with the CNC machine owned by the user. Upon receiving the serial number, the application may provide a list of attributes corresponding to the CNC machine, for example, in the form of a drop-down menu. In an embodiment, the attribute to be validated is a spindle speed of the CNC machine. The spindle speed is associated with the speed of the servo motor. Upon selecting the attribute as spindle speed, the application executes a software program that stores private and public keys and interacts with the blockchain-based system 105 to enable the user for validating the spindle speed of the CNC machine through the electronic device. More specifically, the software program is configured for generating the request for validating the spindle speed. The software program may be hereinafter referred as a 'wallet'. Similarly, the application may be associated with a plurality of wallets. Each wallet may be associated with a component of the CNC machine. For example, a first wallet may be associated with the servo motor, a second wallet may be associated with a programmable logic controller, a third wallet may be associated with a central processing unit and so on. Each of the wallets are associated with the unique identifier corresponding to the respective component. In one example, the unique identifier may be a part number corresponding to the component. The request generated by the wallet may comprise the unique identifier associated with the servo motor. For example, the unique identifier of the servo motor is '781053' The generated request is further transmitted to all other nodes 110 in the blockchain-based system 105 over the network 115. Further, the request for validating the spindle speed is received by the one or more processing units 125 in each of the nodes 110.

Referring to FIG 4, in conjunction with FIGS 1A-3, a method 400 for identifying the one or more components of the product corresponding to the one or more attributes to be validated is described, in accordance with one embodiment of the present invention. The method 400 comprises steps 405 and 410.

At step 405, the unique identifier corresponding to the one or more components of the product is identified from the request received. In the present example, the unique identifier corresponding to the servo motor is identified as '7810S3'.

At step 410, the unique identifier is mapped to the one or more attributes from a plurality of attributes based on a predefined criterion. The unique identifier may be mapped to the one or more components based on pre-existing library that each of the attributes in the CNC machine to unique identifiers corresponding to the respective component of the CNC machine. In the present example, the attribute, spindle speed, is mapped to the unique identifier of the servo motor. In a preferred embodiment, the unique identifier is identified and mapped to the one or more attributes using a second smart contract. The term 'second smart contract' as used herein, may be defined as a software module comprising a set of machine-readable instructions which, when executed, identifies the first transaction and the second transaction corresponding to the one or more attributes of the product.

In one implementation, the second smart contract may identify the first transactions and the second transactions corresponding to a plurality of responses for different instances within a predefined time range. In the previous example, the responses may correspond to 20 microseconds, 40 microseconds, 60 microseconds and so on for every 20 microseconds with a predefined time range of 200 microseconds.

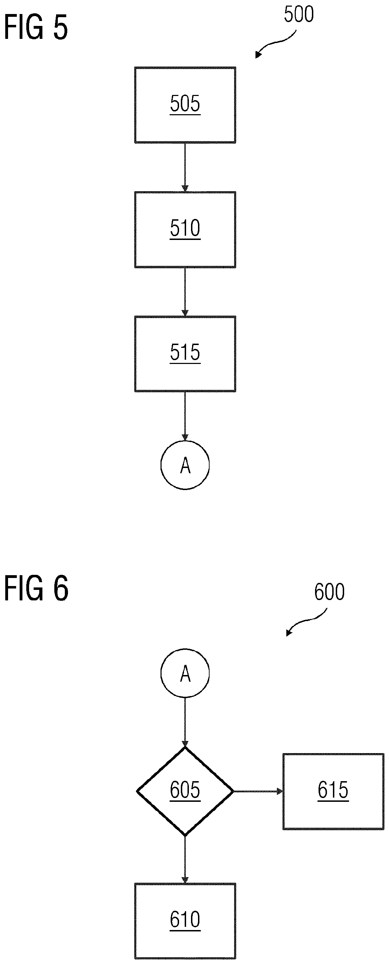

Referring to FIG 5, in conjunction with FIGS 1A-4, a method 500 for determining the first transaction and the second transaction associated with the one or more components from the blockchain data structure is described, in accordance with one embodiment of the present invention. In the present example, the wallet reads the first transaction and the second transaction from the blockchain data structure stored on the nodes 110, by traversing the transactions stored on the blockchain data structure. More specifically, the based on the unique identifier of the servomotor and the type identifier associated with each of the transactions.

At step 505, the one or more outcomes of the physical test from the first transaction and the one or more outcomes of the virtual test from the second transaction are requested. In the present example, the outcome of the physical test is the response Rᵢⱼₖ, in terms of spindle speed, of the servo motor to the voltage input, say 4.8V. Similarly, the outcome of the virtual test is the response, in terms of spindle speed, of the digital twin of the servo motor to an input corresponding to the voltage input.

At step 510, the one or more outcomes of the physical test from the first transaction and the one or more outcomes of the virtual test from the second transaction are received. That is, the spindle speed from the servo motor in response to the voltage of 4.8V and the spindle speed from the digital twin of the servo motor to the virtual test are received.

At step 515, a difference between the one or more outcomes of the physical test and the one or more outcomes of the virtual test is computed. For example, the spindle speed from the physical test is 60° at 0.2 seconds, and the spindle speed from the virtual test is 63° at 0.2 seconds. Therefore, the difference may be computed as 3°.

Referring to FIG 6, in conjunction with FIGS 1A-5, a method 600 for validating the one or more attributes of the product based on the deviations determined is described, in accordance with one embodiment of the present invention.

At step 605, the computed difference between the response of the at least one component to the physical test and the response of the virtual model to the virtual test is checked for conformity against a predefined standard associated with the attribute. If the difference between the response of the at least one component to the physical test and the response of the virtual model to the virtual test conforms to the predefined standard, then the attribute is validated as indicated by step 610. In the present example, the predefined standard may be defined such that the difference between the responses of the digital twin and the servo motor may not be outside the range of -7% to +7% of the response of the digital twin. Therefore, as the computed difference is lesser than +/-7% of the response of the digital twin, that is +/-4.4°, the spindle speed of the CNC machine may be validated. Otherwise, the attribute is not validated as indicated by step 615.

The result of validation of the attributes of the product is further displayed on the GUI 135 associated with the electronic device. In one example, the result of validation may include details such as a time-step associated with the virtual test and the physical test, inputs provided during the virtual test and the physical test, the predefined standard and an indication of whether the attribute is validated or not.

In one embodiment, an anomaly in the product is identified based on the deviation between the one or more outcomes of the physical test from the first transaction and the one or more outcomes of the virtual test from the second transaction. In the above example, if the difference between the response to the physical test and the response of the virtual test is within 0-20%, then an anomaly may be identified in the operation of the servo motor. Further, one or more recommendations are generated based on the anomaly identified. The one or more recommendations may be associated with recalibration of the servo motor. The recommendations may be shown as a notification on a display of the electronic device associated with the user. In addition to the recommendation, additional details such as a nearest location where the calibration may be done may also be provided to the user.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples.

## Claims

1. A computer-implemented method (300) for validating one or more attributes of a product, the method (300) comprising:
conducting a physical test of the product and a virtual test on one or more virtual models associated with the product by coupling sensing units to the product;
transmitting the responses captured by the sensing units to a test device;
creating a first transaction and a second transaction based on the responses of the sensing units;
writing the first transaction and the second transaction on a blockchain data structure, wherein the first transaction comprises one or more outcomes of a physical test performed on the one or more components, and wherein the second transaction comprises one or more outcomes of a virtual test performed on one or more virtual models associated with the one or more components;
receiving, by a processing unit (125), a request for validating the one or more attributes of the product from a source (110-1);
identifying, by the processing unit (125), one or more components of the product corresponding to the one or more attributes to be validated;
determining, by the processing unit (125), the first transaction and the second transaction associated with the one or more components from a blockchain data structure;
determining, by the processing unit (125), a deviation between the one or more outcomes of the physical test from the first transaction and the one or more outcomes of the virtual test from the second transaction; and
validating, by the processing unit (125), the one or more attributes of the product based on the deviation determined.

2. The method according to claim 1, wherein identifying the one or more components of the product corresponding to the one or more attributes to be validated comprises:
identifying, by the processing unit (125), a unique identifier corresponding to the one or more components of the product from the request received; and
mapping the unique identifier to the one or more attributes from a plurality of attributes based on a predefined criterion, by the processing unit (125).

3. The method according to claim 1, wherein determining the first transaction and the second transaction associated with the one or more components from the blockchain data structure comprises:
determining, by the processing unit (125), a unique identifier associated with the one or more components of the product; and
identifying, by the processing unit (125), the first transaction and the second transaction from the blockchain data structure based on the unique identifier associated with the one or more components of the product.

4. The method according to claim 1, wherein the virtual model is a digital twin associated with the one or more components of the product.

5. The method according to claim 1, wherein determining the deviation between the one or more outcomes of the physical test from the first transaction and the one or more outcomes of the virtual test from the second transaction comprises:
requesting, by the processing unit (125), the one or more outcomes of the physical test from the first transaction and the one or more outcomes of the virtual test from the second transaction;
receiving, by the processing unit (125), the one or more outcomes of the physical test from the first transaction and the one or more outcomes of the virtual test from the second transaction; and
computing, by the processing unit (125), a difference between the one or more outcomes of the physical test and the one or more outcomes of the virtual test.

6. The method according to claim 5, wherein validating the one or more attributes of the product based on the deviations determined comprises:
determining, by the processing unit (125), whether the computed difference between the response of the at least one component to the physical test and the response of the virtual model to the virtual test conforms to one or more predefined standards associated with the one or more attributes; and
validating, by the processing unit (125), the one or more attributes of the product if the difference between the response of the at least one component to the physical test and the response of the virtual model to the virtual test conforms to the predefined standards.

7. The method according to claim 1, further comprising:
identifying, by the processing unit (125), an anomaly in the product based on the deviation between the one or more outcomes of the physical test from the first transaction and the one or more outcomes of the virtual test from the second transaction; and
generating, by the processing unit (125), one or more recommendations based on the anomaly identified.

8. The method according to claim 1, further comprising:
outputting, by the processing unit (125), a result of validation of the one or more attributes of the product on a Graphical User Interface (135) of an output device (110).

9. A node (110) comprising:
one or more processing units (125); and
a memory unit (140) communicatively coupled to the one or more processing units (125), wherein the memory unit (140) comprises an attribute validation module (165) stored in the form of machine-readable instructions executable by the one or more processing units (125), wherein the attribute validation module (165) is configured for validating the one or more attributes of the product according to the method of any of the claims 1 to 8, and wherein the memory unit (140) stores the blockchain data structure comprising one or more transactions associated with one or more components of the product.

10. A blockchain-based system (105) for validating one or more attributes of a product, the system comprising:
a network (115); and
one or more nodes (110) according to claim 9, communicatively coupled to each other over the network (115), wherein the one or more nodes (110) are configured for validating the one or more attributes of the product, according to the method of any of claims 1 to 8.

11. A computer-program product having machine-readable instructions stored therein, which when executed by one or more processing units (125), cause the processing units (125) to perform the method according to any of the claims 1 to 8.

12. A computer readable medium on which program code sections of a computer program are saved, the program code sections being loadable into and/or executable in a system (110) to make the system execute the method of any one of the claims 1 to 8 when the program code sections are executed in the system (110) .

## Patentansprüche

1. Computerimplementiertes Verfahren (300) zum Validieren eines oder mehrerer Attribute eines Produkts, wobei das Verfahren (300) umfasst:
Durchführen eines physischen Tests des Produkts und eines virtuellen Tests an einem oder mehreren virtuellen Modellen, die mit dem Produkt assoziiert sind, durch Koppeln von Erfassungseinheiten mit dem Produkt;
Übertragen der von den Erfassungseinheiten erfassten Reaktionen an eine Testvorrichtung;
Erzeugen einer ersten Transaktion und einer zweiten Transaktion auf Grundlage der Reaktionen der Erfassungseinheiten;
Schreiben der ersten Transaktion und der zweiten Transaktion in eine Blockchain-Datenstruktur, wobei die erste Transaktion ein oder mehrere Ergebnisse eines physischen Tests umfasst, der an der einen oder den mehreren Komponenten durchgeführt wird, und wobei die zweite Transaktion ein oder mehrere Ergebnisse eines virtuellen Tests umfasst, der an einem oder mehreren virtuellen Modellen durchgeführt wird, die mit der einen oder den mehreren Komponenten assoziiert sind;
durch eine Verarbeitungseinheit (125) erfolgendes Empfangen einer Anfrage zur Validierung des einen oder der mehreren Attribute des Produkts von einer Quelle (110-1);
durch die Verarbeitungseinheit (125) erfolgendes Identifizieren einer oder mehrerer Komponenten des Produkts, die dem einen oder den mehreren zu validierenden Attributen entsprechen;
durch die Verarbeitungseinheit (125) erfolgendes Bestimmen der ersten Transaktion und der zweiten Transaktion, die mit der einen oder den mehreren Komponenten assoziiert sind, aus einer Blockchain-Datenstruktur;
durch die Verarbeitungseinheit (125) erfolgendes Bestimmen einer Abweichung zwischen dem einen oder mehreren Ergebnissen des physischen Tests aus der ersten Transaktion und dem einen oder mehreren Ergebnissen des virtuellen Tests aus der zweiten Transaktion; und
durch die Verarbeitungseinheit (125) erfolgendes Validieren des einen oder der mehreren Attribute des Produkts auf Grundlage der bestimmten Abweichung.

2. Verfahren nach Anspruch 1, wobei das Identifizieren der einen oder mehreren Komponenten des Produkts, die dem einen oder den mehreren zu prüfenden Attributen entsprechen, umfasst:
durch die Verarbeitungseinheit (125) erfolgendes Identifizieren einer eindeutigen Kennung, die der einen oder den mehreren Komponenten des Produkts entspricht, aus der empfangenen Anfrage; und
Abbilden der eindeutigen Kennung auf das eine oder die mehreren Attribute aus einer Vielzahl von Attributen auf Grundlage eines vordefinierten Kriteriums durch die Verarbeitungseinheit (125).

3. Verfahren nach Anspruch 1, wobei das Bestimmen der ersten Transaktion und der zweiten Transaktion, die mit der einen oder den mehreren Komponenten assoziiert sind, aus der Blockchain-Datenstruktur umfasst:
durch die Verarbeitungseinheit (125) erfolgendes Bestimmen einer eindeutigen Kennung, die mit der einen oder den mehreren Komponenten des Produkts assoziiert ist; und
durch die Verarbeitungseinheit (125) erfolgendes Identifizieren der ersten Transaktion und der zweiten Transaktion aus der Blockchain-Datenstruktur auf Grundlage der eindeutigen Kennung, die mit der einen oder den mehreren Komponenten des Produkts assoziiert ist.

4. Verfahren nach Anspruch 1, wobei das virtuelle Modell ein digitaler Zwilling ist, der mit der einen oder den mehreren Komponenten des Produkts assoziiert ist.

5. Verfahren nach Anspruch 1, wobei das Bestimmen der Abweichung zwischen dem einen oder den mehreren Ergebnissen des physischen Tests aus der ersten Transaktion und dem einen oder den mehreren Ergebnissen des virtuellen Tests aus der zweiten Transaktion umfasst:
durch die Verarbeitungseinheit (125) erfolgendes Anfragen des einen oder der mehreren Ergebnisse des physischen Tests aus der ersten Transaktion und des einen oder der mehreren Ergebnisse des virtuellen Tests aus der zweiten Transaktion;
durch die Verarbeitungseinheit (125) erfolgendes Empfangen des einen oder der mehreren Ergebnisse des physischen Tests aus der ersten Transaktion und des einen oder der mehreren Ergebnisse des virtuellen Tests aus der zweiten Transaktion; und
durch die Verarbeitungseinheit (125) erfolgendes Berechnen einer Differenz zwischen dem einen oder den mehreren Ergebnissen des physischen Tests und dem einen oder den mehreren Ergebnissen des virtuellen Tests.

6. Verfahren nach Anspruch 5, wobei das Validieren des einen oder der mehreren Attribute des Produkts auf Grundlage der bestimmten Abweichungen umfasst:
durch die Verarbeitungseinheit (125) erfolgendes Bestimmen, ob die berechnete Differenz zwischen der Reaktion der mindestens einen Komponente auf den physischen Test und der Reaktion des virtuellen Modells auf den virtuellen Test mit einem oder mehreren vordefinierten Standards übereinstimmt, die mit dem einen oder den mehreren Attributen assoziiert sind; und
durch die Verarbeitungseinheit (125) erfolgendes Validieren des einen oder der mehreren Attribute des Produkts, wenn die Differenz zwischen der Reaktion der mindestens einen Komponente auf den physischen Test und der Reaktion des virtuellen Modells auf den virtuellen Test mit den vordefinierten Standards übereinstimmt.

7. Verfahren nach Anspruch 1, ferner umfassend:
durch die Verarbeitungseinheit (125) erfolgendes Identifizieren einer Anomalie in dem Produkt auf Grundlage der Abweichung zwischen dem einen oder den mehreren Ergebnissen des physischen Tests aus der ersten Transaktion und dem einen oder den mehreren Ergebnissen des virtuellen Tests aus der zweiten Transaktion; und
durch die Verarbeitungseinheit (125) erfolgendes Erzeugen einer oder mehrerer Empfehlungen auf Grundlage der identifizierten Anomalie.

8. Verfahren nach Anspruch 1, ferner umfassend:
durch die Verarbeitungseinheit (125) erfolgendes Ausgeben eines Ergebnisses der Validierung des einen oder der mehreren Attribute des Produkts auf einer grafischen Benutzeroberfläche (135) einer Ausgabevorrichtung (110).

9. Knoten (110), umfassend:
eine oder mehrere Verarbeitungseinheiten (125); und
eine Speichereinheit (140), die kommunikativ mit der einen oder den mehreren Verarbeitungseinheiten (125) gekoppelt ist, wobei die Speichereinheit (140) ein Attributvalidierungsmodul (165) umfasst, das in Form von maschinenlesbaren Anweisungen gespeichert ist, die durch die eine oder die mehreren Verarbeitungseinheiten (125) ausführbar sind, wobei das Attributvalidierungsmodul (165) zum Validieren des einen oder der mehreren Attribute des Produkts gemäß dem Verfahren nach einem der Ansprüche 1 bis 8 konfiguriert ist, und wobei die Speichereinheit (140) die Blockchain-Datenstruktur speichert, die eine oder mehrere Transaktionen umfasst, die mit einer oder mehreren Komponenten des Produkts assoziiert sind.

10. Blockchain-basiertes System (105) zum Validieren eines oder mehrerer Attribute eines Produkts, wobei das System umfasst:
ein Netzwerk (115); und
einen oder mehrere Knoten (110) nach Anspruch 9, die über das Netzwerk (115) kommunikativ miteinander gekoppelt sind, wobei der eine oder die mehreren Knoten (110) zum Validieren des einen oder der mehreren Attribute des Produkts gemäß dem Verfahren nach einem der Ansprüche 1 bis 8 konfiguriert sind.

11. Computerprogrammprodukt mit darin gespeicherten maschinenlesbaren Anweisungen, die bei Ausführung durch eine oder mehrere Verarbeitungseinheiten (125) die Verarbeitungseinheiten (125) veranlassen, das Verfahren nach einem der Ansprüche 1 bis 8 durchzuführen.

12. Computerlesbares Medium, auf dem Programmcodeabschnitte eines Computerprogramms gespeichert sind, wobei die Programmcodeabschnitte in ein System (110) ladbar und/oder ausführbar sind, um das System zu veranlassen, das Verfahren nach einem der Ansprüche 1 bis 8 auszuführen, wenn die Programmcodeabschnitte in dem System (110) ausgeführt werden.

## Revendications

1. Procédé mis en oeuvre par ordinateur (300) pour valider un ou plusieurs attributs d'un produit, le procédé (300) comprenant :
la conduite d'un test physique du produit et d'un test virtuel sur un ou plusieurs modèles virtuels associés au produit en couplant des unités de détection au produit ;
la transmission des réponses capturées par les unités de détection à un dispositif de test ;
la création d'une première transaction et d'une seconde transaction sur la base des réponses des unités de détection ;
l'écriture de la première transaction et de la seconde transaction sur une structure de données de chaîne de blocs, dans lequel la première transaction comprend un ou plusieurs résultats d'un test physique réalisé sur les un ou plusieurs composants, et dans lequel la seconde transaction comprend un ou plusieurs résultats d'un test virtuel réalisé sur un ou plusieurs modèles virtuels associés aux un ou plusieurs composants ;
la réception, par une unité de traitement (125), d'une demande de validation des un ou plusieurs attributs du produit provenant d'une source (110-1) ;
l'identification, par l'unité de traitement (125), d'un ou plusieurs composants du produit correspondant aux un ou plusieurs attributs à valider ;
la détermination, par l'unité de traitement (125), de la première transaction et de la seconde transaction associées aux un ou plusieurs composants d'une structure de données de chaîne de blocs ;
la détermination, par l'unité de traitement (125), d'un écart entre les un ou plusieurs résultats du test physique de la première transaction et les un ou plusieurs résultats du test virtuel de la seconde transaction ; et
la validation, par l'unité de traitement (125), des un ou plusieurs attributs du produit sur la base de l'écart déterminé.

2. Procédé selon la revendication 1, dans lequel l'identification des un ou plusieurs composants du produit correspondant aux un ou plusieurs attributs à valider comprend :
l'identification, par l'unité de traitement (125), d'un identifiant unique correspondant aux un ou plusieurs composants du produit à partir de la demande reçue ; et
le mappage de l'identifiant unique aux un ou plusieurs attributs d'une pluralité d'attributs sur la base d'un critère prédéfini, par l'unité de traitement (125).

3. Procédé selon la revendication 1, dans lequel la détermination de la première transaction et de la seconde transaction associées aux un ou plusieurs composants de la structure de données de chaîne de blocs comprend :
la détermination, par l'unité de traitement (125), d'un identifiant unique associé aux un ou plusieurs composants du produit ; et
l'identification, par l'unité de traitement (125), de la première transaction et de la seconde transaction de la structure de données de chaîne de blocs sur la base de l'identifiant unique associé aux un ou plusieurs composants du produit.

4. Procédé selon la revendication 1, dans lequel le modèle virtuel est un jumeau numérique associé aux un ou plusieurs composants du produit.

5. Procédé selon la revendication 1, dans lequel la détermination de l'écart entre les un ou plusieurs résultats du test physique de la première transaction et les un ou plusieurs résultats du test virtuel de la seconde transaction comprend :
la demande, par l'unité de traitement (125), des un ou plusieurs résultats du test physique de la première transaction et des un ou plusieurs résultats du test virtuel de la seconde transaction ;
la réception, par l'unité de traitement (125), des un ou plusieurs résultats du test physique de la première transaction et des un ou plusieurs résultats du test virtuel de la seconde transaction ; et
le calcul, par l'unité de traitement (125), d'une différence entre les un ou plusieurs résultats du test physique et les un ou plusieurs résultats du test virtuel.

6. Procédé selon la revendication 5, dans lequel la validation des un ou plusieurs attributs du produit sur la base des écarts déterminés comprend :
le fait de déterminer, par l'unité de traitement (125), si la différence calculée entre la réponse de l'au moins un composant au test physique et la réponse du modèle virtuel au test virtuel est conforme à une ou plusieurs normes prédéfinies associées aux un ou plusieurs attributs ; et
la validation, par l'unité de traitement (125), des un ou plusieurs attributs du produit si la différence entre la réponse de l'au moins un composant au test physique et la réponse du modèle virtuel au test virtuel est conforme aux normes prédéfinies.

7. Procédé selon la revendication 1, comprenant en outre :
l'identification, par l'unité de traitement (125), d'une anomalie dans le produit sur la base de l'écart entre les un ou plusieurs résultats du test physique de la première transaction et les un ou plusieurs résultats du test virtuel de la seconde transaction ; et
la génération, par l'unité de traitement (125), d'une ou plusieurs recommandations sur la base de l'anomalie identifiée.

8. Procédé selon la revendication 1, comprenant en outre :
l'émission, par l'unité de traitement (125), d'un résultat de validation des un ou plusieurs attributs du produit sur une interface utilisateur graphique (135) d'un dispositif de sortie (110).

9. Noeud (110) comprenant :
une ou plusieurs unités de traitement (125) ; et
une unité de mémoire (140) couplée en communication aux une ou plusieurs unités de traitement (125), dans lequel l'unité de mémoire (140) comprend un module de validation d'attributs (165) stocké sous la forme d'instructions lisibles par machine exécutables par les une ou plusieurs unités de traitement (125), dans lequel le module de validation d'attributs (165) est configuré pour valider les un ou plusieurs attributs du produit selon le procédé selon l'une quelconque des revendications 1 à 8, et dans lequel l'unité de mémoire (140) stocke la structure de données de chaîne de blocs comprenant une ou plusieurs transactions associées à un ou plusieurs composants du produit.

10. Système basé sur chaîne de blocs (105) pour valider un ou plusieurs attributs d'un produit, le système comprenant :
un réseau (115) ; et
un ou plusieurs noeuds (110) selon la revendication 9, couplés en communication les uns avec les autres sur le réseau (115), dans lequel les un ou plusieurs noeuds (110) sont configurés pour valider les un ou plusieurs attributs du produit, selon le procédé selon l'une quelconque des revendications 1 à 8.

11. Produit de programme informatique dans lequel sont stockées des instructions lisibles par machine, qui lorsqu'elles sont exécutées par une ou plusieurs unités de traitement (125), amènent les unités de traitement (125) à réaliser le procédé selon l'une quelconque des revendications 1 à 8.

12. Support lisible par ordinateur sur lequel des sections de code de programme d'un programme informatique sont enregistrées, les sections de code de programme pouvant être chargées et/ou exécutées dans un système (110) pour amener le système à exécuter le procédé selon l'une quelconque des revendications 1 à 8 lorsque les sections de code de programme sont exécutées dans le système (110).
